# EUROPÄISCHE PATENTSCHRIFT

(11) **EP 3 049 911 B1**
(45) Veröffentlichungstag und Bekanntmachung des Hinweises auf die Patenterteilung: **20.05.2020**
(21) Anmeldenummer: 13773205.3
(22) Anmeldetag: 27.09.2013
(51) Int. Cl.: G06F 3/16, G06F 3/0488

(54) **ANWENDERSCHNITTSTELLE UND VERFAHREN ZUR UNTERSTÜTZUNG EINES ANWENDERS BEI DER BEDIENUNG EINER BEDIENEINHEIT**
USER INTERFACE AND METHOD FOR ASSISTING A USER IN THE OPERATION OF AN OPERATOR CONTROL UNIT
INTERFACE D'UTILISATEUR ET PROCÉDÉ D'ASSISTANCE D'UN UTILISATEUR LORS DE L'ACTIONNEMENT D'UNE UNITÉ DE COMMANDE

(43) Veröffentlichungstag der Anmeldung: 03.08.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE); SEITZ, Gordon, 38468 Ehra-Lessien (DE)
(86) Internationale Anmeldenummer: PCT/EP2013/070215
(87) Internationale Veröffentlichungsnummer: WO 2015/043653

(56) Entgegenhaltungen:
- DE-A1-102007 039 450
- US-A1- 2006 022 955
- US-A1- 2009 225 043

## Beschreibung

### Stand der Technik

Die vorliegende Erfindung betrifft eine Anwenderschnittstelle sowie ein Verfahren zur Unterstützung eines Anwenders bei der Bewegung einer berührungsempfindlichen Bedieneinheit. Insbesondere betrifft die vorliegende Erfindung die Unterstützung eines Fahrers eines Fortbewegungsmittels beim Bedienen einer fortbewegungsmittel-basierten Bedieneinheit während des Führens des Fortbewegungsmittels.

Im Stand der Technik sind Betriebssysteme für Bedieneinheiten bekannt, welche Bildschirminhalte verwenden, bei welchen Informations-/Schalteinheiten (auch "Icons" oder "Kacheln" genannt) zum Starten einer zugeordneten Funktion neben einander dargestellt werden. Diese Kacheln können mitunter im Ansprechen auf einen Anwenderwunsch neu zueinander angeordnet oder vollständig ausgetauscht werden. Mitunter können auch die Darstellung der Kacheln verändert oder Informationen innerhalb der Kacheln modifiziert werden. Beispiele für gattungsgemäße Betriebssysteme sind Windows 8 (eingetragene Marke) sowie das AirView (eingetragene Marke) des Samsung Galaxy S4 (eingetragene Marke). Bei der Bedienung von Bedieneinheiten von Fortbewegungsmittels und Smartphones haben sich hingegen neben tastenbasierten Eingabeeinheiten auch sog. "Touch-Screens" (berührungsempfindlicher Bildschirm) durchgesetzt.

WO 2009/062677 A2 offenbart eine multimodale Benutzerschnittstelle eines Fahrerinformationssystems zur Eingabe und Präsentation von Informationen, bei welchem ein Verweilen eines Fingers eines Anwenders in einem Bereich vor einem vordefinierten Bildschirmbereich zum Auslösen einer Funktion der Benutzerschnittstelle führt. Hierbei wird, ohne dass der Anwender in Kontakt mit der Bedieneinheit steht, die Präsenz des Fingers erkannt und mitunter sogar einem konkreten Bildschirminhalt zugeordnet, so dass eine kontextspezifische Funktion durch diesen auch als "Hovern" bezeichneten Bedienschritt gestartet wird.

DE 10 2007 039 450 A1 offenbart einen berührungsempfindlichen Bildschirm, bei welchem im Ansprechen auf das Unterschreiten eines vorbestimmten Abstandes zwischen einem Eingabemittel (z.B. ein Finger oder ein Eingabestift) und einer Schaltfläche ein akustisches Feedback ausgegeben wird.

US 2006/022955 A1 offenbart ein Verfahren zum Bedienen einer berührungsempfindlichen Anzeige, bei welchem ein Verweilen auf einer Schaltfläche für eine vordefinierte Mindestdauer zum Vergrößern eines unter dem Finger befindlichen Bereiches führt. Ein akustisches Feedback ist dazu vorgesehen, dem Anwender eine Information darüber auszugeben, ob er sich über dem beabsichtigten Anzeigebereich befindet.

US 2009/225043 A1 offenbart eine Eingabeeinrichtung mit Annäherungserkennung. Die Tatsache, dass der Finger oder die Hand in der Nähe zu einem bestimmten berührungssensitiven Sensor verweilt, führt zum Ausgeben eines akustischen Feedbacks an den Anwender.

Die im Stand der Technik beschriebenen Bedienschritte schöpfen das Potential zur Bedienung von Bedieneinheiten jedoch nur unvollständig aus.

Es ist daher eine Aufgabe der vorliegenden Erfindung, einem Anwender weitere Möglichkeiten bereitzustellen, mit einer Bedieneinheit zu interagieren.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 8 gelöst, wobei die Unteransprüche bevorzugte Weiterbildungen der Erfindung betreffen. Das erfindungsgemäße Verfahren dient der Unterstützung eines Anwenders bei der Bedienung einer berührungsempfindlichen Bedieneinheit und umfasst ein Erkennen einer Präsenz eines Eingabemittels in einem vordefinierten ersten Bereich vor einer auf der Bedieneinheit angezeigten Schaltfläche. Dabei kann die Bedieneinheit beispielsweise ein berührungsempfindlicher Bildschirm eines "Smartphones", eines "Tablets" oder einer HMI innerhalb eines Kraftfahrzeugs sein. Das Eingabemittel kann beispielsweise ein "Stylus", ein Schreibgerät oder bevorzugt der Finger eines Anwenders sein. Durch die Formulierung "vor einer auf der Bedieneinheit angezeigten Schaltfläche" wird im Rahmen der vorliegenden Erfindung ein Bereich verstanden, welcher nicht in Kontakt mit der Bedieneinheit steht. Ein solcher Bedienschritt wird im Stand er Technik auch als "Hovern" bezeichnet. Im Ansprechen auf die erkannte Präsenz wird ein Timer mit einer vordefinierten Zeitdauer gestartet. Im Ansprechen auf ein Ablaufen des Timers wird eine mit der Schaltfläche assoziierte Sekundärfunktion der Schaltfläche ausgeführt. Unter einer "Sekundärfunktion der Schaltfläche" wird erfindungsgemäß eine solche Funktion bezeichnet, welche nicht ein Ausführen der assoziierten Funktion selbst betrifft, sondern eine alternative Interaktion bezüglich der Schaltfläche oder der Primärfunktion, ein Umorganisieren oder Modifizieren der Schaltfläche bzw. der Funktion beschreibt. Bei der Maus-basierten Bedienung von PC-Betriebssystemen werden solche Sekundärfunktionen häufig über einen Rechtsklick ausgelöst. Beispiele für Sekundärfunktionen werden in der folgenden Beschreibung erläutert. Unter einer "Schaltfläche" sei im Rahmen der vorliegenden Erfindung nicht lediglich ein zum Starten einer Hauptfunktion ("Primärfunktion") dienendes Element verstanden, sondern auch ein flächenmäßig begrenztes Element zur Wiedergabe von Informationen (z.B. wiedergegebener Titel, Navigationsroute, Wetter), welche im Stand der Technik auch als "Kacheln" bezeichnet werden. Allerdings ist die Schaltfläche zumindest dahingehend einer Interaktion zugänglich, dass eine Anwendereingabe bezüglich der Schaltfläche erkannt und der Schaltfläche zugeordnet werden kann. Indem erfindungsgemäß ab einer vordefinierten Verweildauer des Eingabemittels vor der Schaltfläche eine Sekundärfunktion gestartet werden kann, werden zusätzliche, mit der Schaltfläche assoziierte Funktionen zugreifbar, obwohl beispielsweise ein Rechtsklick in Ermangelung eines entsprechenden Eingabemittels nicht zur Verfügung steht.

Der Timer kann gestoppt werden, sobald die Präsenz des Eingabemittels in dem vordefinierten ersten Bereich vor dessen Ablaufen endet. Auf diese Weise kann verhindert werden, dass eine kurzzeitige Präsenz des Eingabemittels vor der Bedieneinheit zu einem unerwünschten Auslösen einer Sekundärfunktion der angezeigten Schaltfläche führt. Stattdessen kann eine Primärfunktion ausgeführt werden, wenn die Präsenz des Eingabemittels in einem vordefinierten ersten Zeitbereich (z.B. vor Ablauf) des Timers endet. Mit anderen Worten wird eine der Schaltfläche zugeordnete Primärfunktion direkt zugegriffen, sobald die Präsenz des Eingabemittels eine Mindestdauer besteht. Alternativ kann die Primärfunktion ausgeführt werden, wenn die Präsenz des Eingabemittels mindestens einen zweiten (kürzeren) Zeitbereich andauert, jedoch vor dem Ablaufen des ersten Zeitbereichs endet. Auf diese Weise kann zwischen der Primärfunktion und der Sekundärfunktion bzw. einer jeweiligen korrespondierenden Eingabe unterschieden werden, was die Vielfalt möglicher Interaktionen erhöht und die Anzahl erforderlicher Interaktionen zum Auslösen einer Sekundärfunktion (nach dem Stand der Technik z.B. über ein Konfigurationsmenü) verringert.

Der vordefinierte erste Bereich kann in einem Abstandsbereich zwischen 1 mm und 100 mm von der Oberfläche der Bedieneinheit angeordnet sein. Zumindest sollte ein Mindestabstand > 0 mm, bevorzugt 1 mm, äußerst bevorzugt > 2 mm von der Oberfläche eingehalten werden, um eine klare Unterscheidung zwischen Touch-Eingaben und Hover-Eingaben zu ermöglichen. Die Erstreckung des vordefinierten ersten Bereiches parallel zur Oberfläche der Bedieneinheit kann im Wesentlichen entsprechend der Schaltfläche selbst begrenzt sein. Auf diese Weise ergibt sich für den ersten vordefinierten Bereich eine solche Grenzfläche senkrecht zur Oberfläche der Bedieneinheit, dass die Schaltfläche eine senkrechte Projektion des ersten vordefinierten Bereiches auf die Oberfläche darstellt. Auf diese Weise können nebeneinander angeordnete Schaltflächen einer erfindungsgemäßen Eingabe zugeordnet und entsprechende Sekundärfunktionen sicher unterschieden werden.

Erfindungsgemäß ist es nicht erforderlich, dass vor der Präsenz des Eingabemittels innerhalb des ersten vordefinierten Bereiches keine Interaktion mit der Bedieneinheit erfolgte. Daher kann eine Präsenz auch dann erkannt werden, wenn das Eingabemittel von einem vordefinierten zweiten Bereich in den vordefinierten ersten Bereich bezüglich der Bedieneinheit übertritt. Zum Starten des erfindungsgemäßen Timers ist es selbstverständlich unerheblich, ob das Verlassen des zweiten Bereiches oder das Betreten des ersten Bereiches erkannt wird. Ebenso kann eine Präsenz in einem Bereich zwischen dem ersten und dem zweiten Bereich das Starten des Timers veranlassen. Auf diese Weise kann die Sekundärfunktion unabhängig von der Herkunft des Eingabemittels ausgelöst werden, was die Anwenderakzeptanz eines solchen Bedienschrittes erhöht.

Bevorzugt kann der Ablauf des Timers eine Audioausgabe veranlassen, durch welche der Anwender darüber informiert wird, dass eine Sekundärfunktion ausgeführt wird oder zumindest zur Auswahl steht. Insbesondere in dem Fall, dass der Anwender den Bedienschritt während der Wahrnehmung seiner Fahraufgabe ausführt, kann sein Augenmerk auf das Verkehrsgeschehen gerichtet verbleiben, während die Audioausgabe ihn über die anstehende oder ausgeführte Sekundärfunktion informiert. Zudem wird der Anwender auf diese Weise darüber informiert, dass der durchgeführte Bedienschritt nicht die Primärfunktion ausgelöst hat. Die Audioausgabe ermöglicht daher eine weitere Verbesserung des erfindungsgemäßen Verfahrens.

Die Schaltfläche kann ein Element eines Hauptbildschirms sein, welcher in bekannten Bedienkonzepten auch als Ausgangsbildschirm oder "Homescreen" bezeichnet wird. In solchen Homescreens besteht eine Sekundärfunktion häufig darin, mit vordefinierten Funktionen assoziierte Bildelemente ("Icons") alternativ zu arrangieren oder zu löschen. Auf diese Weise kann ein erfindungsgemäßer Bedienschritt ("longpress - hovern") zur anwenderspezifischen Anordnung bzw. Gestaltung eines Homescreens verwendet werden.

Beispiele für erfindungsgemäß auslösbare Sekundärfunktionen werden nachfolgend genannt. Eine mögliche Sekundärfunktion, welche beispielsweise bei der Interaktion mit einer Kartenanzeige eines Navigationssystems assoziiert sein kann, ist eine Ausgabe einer letzten Navigationsansage oder der Start eines kontextspezifischen Sprachdialogs, mittels welchem der Anwender ein neues Ziel eingeben, die Entfernung oder Zeitdauer bis zum Erreichen des Ziels abfragen oder Verkehrsbehinderungen auf einer aktuell gefahrenen Route abfragen kann. In einem nachrichtenspezifischen Kontext kann eine empfangene oder verfasste Textnachricht vorgelesen werden. Sofern die Schaltfläche einer Entertainment-Funktion zugeordnet ist, kann die erfindungsgemäße Eingabe einen Befehl zur Steuerung der Musikwiedergabe darstellen. Beispielsweise kann die aktuelle Wiedergabe angehalten bzw. fortgesetzt werden oder ein Sprachdialog zur Eingabe eines wiederzugebenden Musiktitels gestartet werden. Alternativ und unabhängig von einer assoziierten Primärfunktion kann die erfindungsgemäße Eingabe auch eine Änderung eines Inhaltes der Schaltfläche umfassen. Beispielsweise kann der Anwender nach der erfindungsgemäßen Eingabe auswählen, welche Informationen die Schaltfläche nachfolgend wiedergeben soll. Eine weitere mögliche Sekundärfunktion besteht darin, die Schaltfläche bzw. ihren Inhalt an eine andere Position innerhalb der Anzeige der Bedieneinheit zu verschieben. Beispielsweise wäre es bei der Verwendung zweier Bildschirme (z.B. ein Smartphone und ein Fernseher bzw. ein HMI-Display und ein Kombiinstrument) möglich, den Informationsgehalt der erfindungsgemäß bedienten Schaltfläche auf den jeweils anderen Bildschirm zu verschieben. Alternativ kann die Sekundärfunktion auch eine Anpassung einer Darstellungsgröße des Inhaltes der Schaltfläche ermöglichen. Die vorgenannten Sekundärfunktionen können erfindungsgemäß durch einen einzigen Bedienschritt gestartet werden, ohne dass zuvor ein Sekundärmenü aufgerufen werden muss.

Die einer erfindungsgemäßen Interaktion zugeordneten Sekundärfunktionen können beispielsweise durch ein Konfigurationsmenü editiert werden. Dabei kann eine vordefinierte Sekundärfunktion einer Schaltfläche ebenso zugeordnet werden, wie mehrere Sekundärfunktionen, aus welchen beispielsweise eine nach einem erfindungsgemäßen Bedienschritt wunschgemäß auszuwählen ist. Hierzu kann die Vielzahl assoziierter Sekundärfunktionen beispielsweise in Form eines Sekundärmenüs (z.B. in Form eines sog. "Pop-Ups") visualisiert und ausgewählt werden.

Gemäß einem zweiten Aspekt der vorliegenden Erfindung wird eine Anwenderschnittstelle vorgeschlagen, welche beispielsweise als fest in einem Kraftfahrzeug verbaute Mensch-Maschine-Schnittstelle (auch human-machine-interface, HMI) bezeichnet wird. Selbstverständlich sind auch Anwenderschnittstellen handgehaltener Benutzerendgeräte (z.B. Smartphones, Tablets) erfindungsgemäß adressiert. Die Anwenderschnittstelle umfasst eine berührungsempfindliche Bedieneinheit und eine Erkennungseinrichtung zum Erkennen einer Anwendereingabe. Zur Zuordnung von Anwendereingaben zu auf der Bedieneinheit dargestellten Schaltflächen ist eine Verarbeitungseinrichtung vorgesehen, welche beispielsweise einen Prozessor (z.B. Mikrocontroller, Nanocontroller o.ä.) umfassen kann. Die Erkennungseinrichtung kann beispielsweise eine Kamera und/oder einen kapazitiven Sensor umfassen, mittels welcher Longpress-Hover-Eingaben erfindungsgemäß erkannt werden können. Die Anwenderschnittstelle ist eingerichtet, ein Verfahren nach einem der vorstehenden Ansprüche durchzuführen. Mit anderen Worten wird eine erfindungsgemäße Anwendereingabe zum Starten eines Timers verwendet, bei dessen Ablauf eines Sekundärfunktion ausgeführt wird, wie sie einer auf der Bedieneinheit dargestellten Schaltfläche zugeordnet ist. Die Bedieneinheit kann beispielsweise zentral im Armaturenbrett eines Fahrzeugs angeordnet sein und optional ein pixel-basiertes Display (auch "Matrix-Anzeige") umfassen, welche im Kombiinstrument des Kraftfahrzeugs angeordnet ist. Auch ein im Kombiinstrument angeordnetes Anzeigeelement kann (allein) als Bedieneinheit im Sinne der vorliegenden Erfindung ausgestaltet sein. Dies bietet insbesondere den Vorteil, dass ein Anwender Eingaben machen kann, ohne zwischen die Speichen des Lenkrades greifen zu müssen. Die Merkmale, Merkmalskombinationen und die sich aus diesen ergebenen Vorteile entsprechen den in Verbindung mit dem erstgenannten Erfindungsaspekt beschriebenen derart ersichtlich, dass zur Vermeidung von Wiederholungen auf die obigen Ausführungen verwiesen wird.

Um das erfindungsgemäße Verfahren tolerant gegen ein kurzfristiges Verlassen eines vordefinierten Bereiches vor einer Schaltfläche zu machen, kann ein zweiter Timer verwendet werden, mittels welchem eine Zeitdauer zwischen einem Verlassen und einem Wiedereintritt des Eingabemittels bezüglich desselben Bereiches erfasst wird. Unterschreitet der zweite Timer bis zum Wiedereintritt eine vordefinierte Zeitdauer, wird der erfindungsgemäße erste Timer fortgesetzt, anstatt neu gestartet zu werden. Insbesondere bei schwierigen Eingabesituationen kann hierdurch das Auslösen einer Sekundärfunktion zuverlässiger vorgenommen werden, was beispielsweise bei unebener Fahrbahn das erfindungsgemäße Auslösen der Sekundärfunktion anwenderfreundlicher macht.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Bestandteile eines Ausführungsbeispiels einer erfindungsgemäßen Anwenderschnittstelle;
- Figur 2: eine schematische Ansicht eines Ausführungsbeispiels eines erfindungsgemäßen Bedienschritts;
- Figur 3: eine alternative Ansicht eines Ausführungsbeispiels eines erfindungsgemäßen Bedienschritts;
- Figur 4: eine weitere alternative Ansicht eines Ausführungsbeispiels eines erfindungsgemäßen Bedienschritts; und
- Figur 5: ein Flussdiagramm, veranschaulichend Verfahrensschritte eines erfindungsgemäßen Verfahrens.

### Ausführungsformen der Erfindung

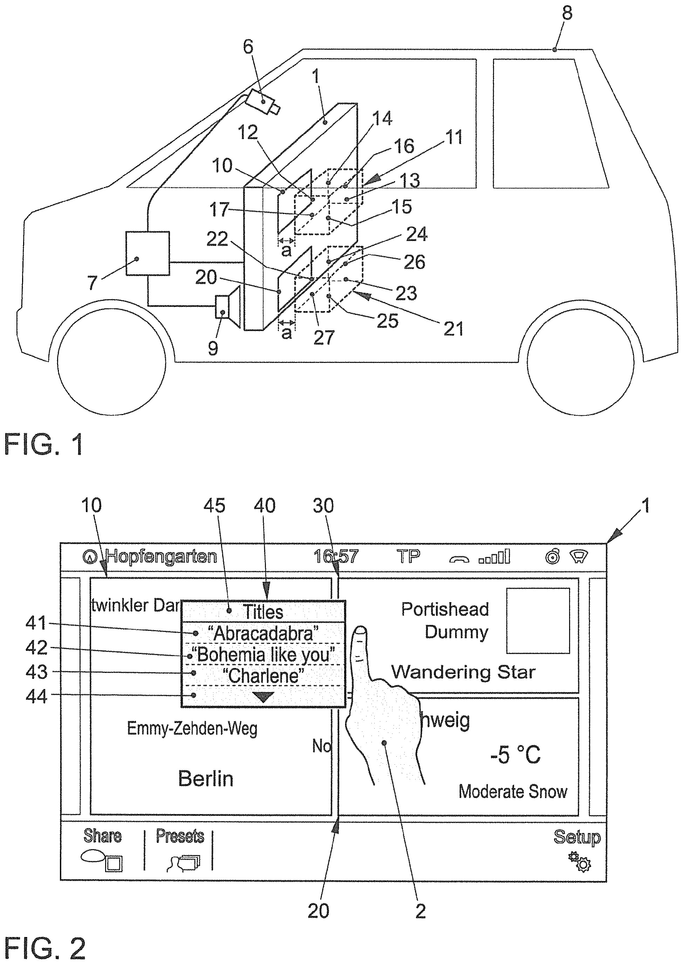

Figur 1 zeigt ein Fortbewegungsmittel 8, in welchem ein Bildschirm einer HMI als Bedieneinheit 1 in das Armaturenbrett eingelassen ist. Eine Kamera 6 ist als Erkennungseinrichtung im Bereich der Windschutzscheibe vorgesehen. Die Kamera 6 ist mit einem elektronischen Steuergerät 7 als Verarbeitungseinrichtung datentechnisch verbunden. Weiter ist das elektronische Steuergerät 7 mit einem Lautsprecher 9 zur Erzeugung einer Audioausgabe sowie mit der Bedieneinheit 1 verbunden, auf deren Bildschirm eine erste Schaltfläche 10 und eine zweite Schaltfläche 20 dargestellt sind. In einem jeweiligen Abstand a zu den Schaltflächen 10, 20 sind jeweilige, quaderförmige Bereiche 11, 21, gestrichelt dargestellt, in denen eine Präsenz eines Eingabemittels als Hovern erkannt wird. Die Bereiche 11, 21 sind durch eine erste, parallel zur Oberfläche der Bedieneinheit 1 orientierte Fläche 12 bzw. 22, eine zweite, parallel zur Oberfläche der Bedieneinheit 1 orientierte und weiter von der Oberfläche entfernte zweite Fläche 13 bzw. 23 und durch vier senkrecht zur Oberfläche der Bedieneinheit 1 orientierte Flächen 14 bzw. 24, 15 bzw. 25, 16 bzw. 26 und 17 bzw. 27 derart begrenzt, dass die Schaltflächen 10, 20 senkrechte Projektionen der Bereiche 11, 21 auf der Oberfläche der Bedieneinheit 1 darstellen bzw. von den Rändern dieser Projektionen begrenzt sind.

Figur 2 zeigt eine mögliche Darstellung auf einer Bedieneinheit 1 einer erfindungsgemäßen Anwenderschnittstelle. Auf einer linken Seite wird in einer ersten Schaltfläche 10 ein Kartenausschnitt dargestellt, welcher mit einem Teil einer durch ein Navigationssystem errechneten Route korrespondiert. Auf der rechten Bildschirmseite wird in einem oberen Bereich eine dritte Schaltfläche 30 dargestellt, über welche ein aktuell wiedergegebener Titel, dessen Interpret und das Album, auf welchem der Titel enthalten ist, optisch wiedergegeben werden. Unterhalb der dritten Schaltfläche 30 ist eine zweite Schaltfläche 20 dargestellt, in welcher das Wetter in Braunschweig in Form eines Icons in Verbindung mit einer Grad-Celsius-Angabe und einem aktuellen Niederschlag wiedergegeben wird. Die Hand eines Anwenders 2 befindet sich vor der dritten Schaltfläche 30. Nach einer vordefinierten Zeitdauer, was über einen Ablauf eines Timers erkannt wird, wird eine mit der dritten Schaltfläche 30 assoziierte Sekundärfunktion gestartet. Diese besteht darin, dass ein Pop-Up 40 der bisherigen Darstellung überlagert wird, in welchem unter der Überschrift 45 drei Musiktitel 41, 42, 43 zur Wiedergabe angeboten werden. Über eine mit einem Pfeil versehene Schaltfläche 44 kann der Anwender 2 durch die zur Verfügung stehenden Musiktitel 41, 42, 43 scrollen und durch ein Tippen (z.B. in Form einer Touch-Eingabe) einen Musiktitel 41, 42, 43 auswählen, ohne zuvor zu einer Schaltfläche wechseln zu müssen, welche zur Bedienung der Musikwiedergabe in Form einer Primärfunktion vorgesehen ist.

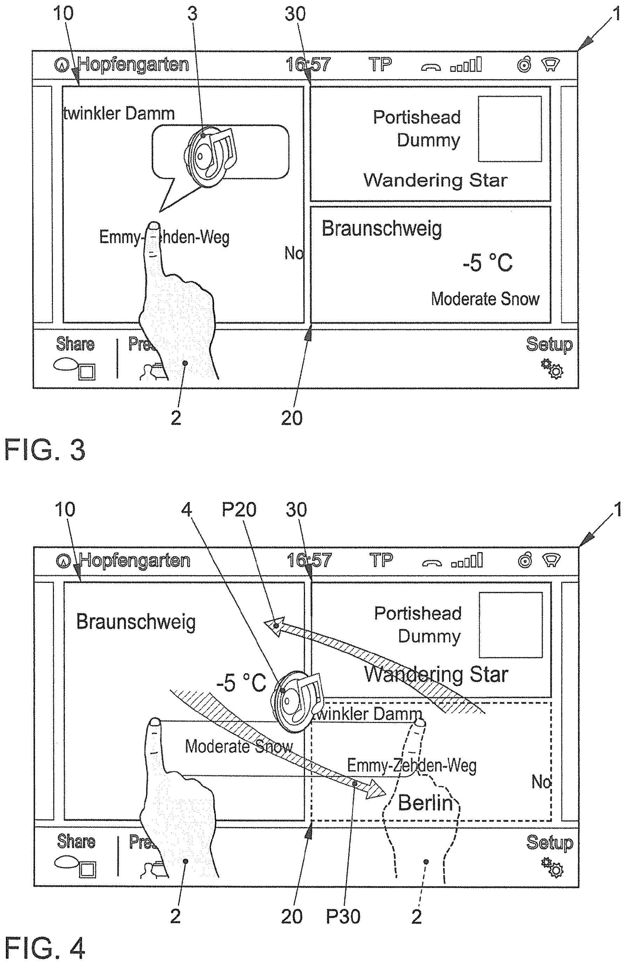

Figur 3 zeigt eine mögliche Bedienoberfläche, in welcher der Anwender 2 den Finger vor der ersten Schaltfläche 10 platziert, um eine mit dieser assoziierten Sekundärfunktion auszulösen. Nach Ablaufen eines Timers erfolgt daher eine Sprachausgabe 3 einer Sprachdialogfunktion, welche zur Bedienung des Navigationssystems dient. Im Beispiel wird der Anwender 2 aufgefordert, eine neue Zieladresse einzugeben. Indem die erfindungsgemäße Eingabe eine kontextspezifische Spracherkennung mit Bezug zur Navigationsfunktion startet, können die nachfolgenden Eingaben bzw. Sprachbefehle des Anwenders 2 schwerpunktmäßig hinsichtlich einer Navigationsanweisung ausgewertet werden, wodurch Fehlerkennungen reduziert werden können.

Figur 4 zeigt die in Verbindung mit Figur 3 dargestellte Ansicht, bei welcher jedoch eine alternative Geste P20 mittels der Hand des Anwenders 2 ausgeführt wird. Nach einem Verweilen der Hand des Anwenders 2 oberhalb der zweiten Schaltfläche 20, wird durch eine Audioausgabe 4 signalisiert, dass per "drag-and-drop"-Geste eine Neuanordnung der Schaltflächen 10, 20, 30 erfolgen kann. Entsprechend verschiebt der Anwender 2 die Inhalte der bisherigen zweiten Schaltfläche 20 entlang eines Pfeils P20 an den Ort der bisherigen ersten Schaltfläche 10. Automatisch springt noch während der Geste P20 der Inhalt der bisherigen ersten Schaltfläche 10 an den Ort der bisherigen zweiten Schaltfläche 20 (entlang des Pfeils P30). Auf diese Weise kann der Anwender 2 detailliertere Wetterinformationen auf einem größeren Bereich des Bildschirms der Bedieneinheit 1 darstellen, während die Routeninformationen des Navigationssystems nun weniger Platz beanspruchen.

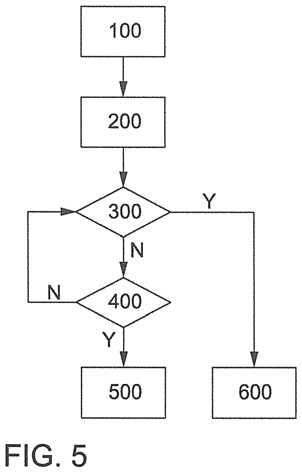

Figur 5 zeigt ein Flussdiagramm, veranschaulichend die Schritte eines Ausführungsbeispiels eines erfindungsgemäßen Verfahrens. In Schritt 100 ruft der Anwender ein Konfigurationsmenü in den Einstellungen der erfindungsgemäßen Bedieneinheit 1 auf, in welchem er einzelnen Schaltflächen des Betriebssystems einzelne oder mehrere Sekundärfunktionen zuordnen kann. Anschließend beendet der Anwender die Konfiguration und beginnt mit der Bedienung der erfindungsgemäßen Anwenderschnittstelle. Hierzu wird in Schritt 200 die Präsenz seines Fingers vor einer Schaltfläche erkannt, welche auf der Bedieneinheit 1 dargestellt wird. Sobald die Präsenz des Fingers erkannt wird, wird ein Timer gestartet, der in Schritt 300 daraufhin überprüft wird, ob er abgelaufen ist. Ist dies nicht der Fall ("N"), wird in Schritt 400 überprüft, ob die Präsenz des Eingabemittels in dem vordefinierten Bereich vor der Schaltfläche mittlerweile beendet ist. Ist dies der Fall ("Y"), wird in Schritt 500 eine der Schaltfläche zugeordnete Primärfunktion ausgeführt. Dies kann beispielsweise das Starten der mit der Schaltfläche assoziierten Standardfunktion sein. Ist die Präsenz des Eingabemittels nicht beendet ("N"), wird in Schritt 300 erneut überprüft, ob der Timer mittlerweile abgelaufen ist. Ist dies mittlerweile der Fall ("Y"), wird in Schritt 600 erfindungsgemäß die mit der Schaltfläche assoziierte Sekundärfunktion ausgelöst.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Bedieneinheit
- 2: Anwender
- 3, 4: Audio-Ausgabe
- 6: Kamera
- 7: elektronisches Steuergerät
- 8: Fahrzeug
- 9: Lautsprecher
- 10: Schaltfläche
- 11: erster Bereich
- 12, 13, 14, 15, 16, 17: Bereichsgrenzen
- 20: Schaltfläche
- 21: zweiter Bereich
- 22, 23, 24, 25, 26, 27: Bereichsgrenzen
- 40: Pop-Up
- 41, 42, 43: Musiktitel
- 44: Scroll-Fläche
- 45: Titelleiste
- 100, 200, 300, 400, 500, 600: Verfahrensschritte
- a: Abstand
- P20: Geste
- P30: Schaltflächenbewegung

## Patentansprüche

1. Verfahren zur Unterstützung eines Anwenders bei der Bedienung einer berührungsempfindlichen Bedieneinheit (1), umfassend die Schritte:
- Erkennen (200) einer Präsenz eines Eingabemittels (2), insbesondere eines Fingers des Anwenders, in einem vordefinierten ersten Bereich (11), welcher keinen Kontakt zur Bedieneinheit (1) aufweist, vor einer auf der Bedieneinheit (1) angezeigten Schaltfläche (10, 20, 30),
**gekennzeichnet durch** im Ansprechen darauf:
- Starten eines Timers mit einer vordefinierten Zeitdauer, und im Ansprechen auf ein Ablaufen des Timers
- Ausführen (400) einer mit der Schaltfläche (10, 20, 30) assoziierten Sekundärfunktion der Schaltfläche (10, 20, 30), wobei
- eine Primärfunktion ausgeführt wird, wenn die Präsenz des Eingabemittels (2) in einem vordefinierten ersten Zeitbereich des Timers endet, und
- die Sekundärfunktion ausgeführt wird, wenn die Präsenz des Eingabemittels (2) in einem vordefinierten zweiten Zeitbereich des Timers endet, wobei der erste Zeitbereich kürzer als der zweite Zeitbereich ist.

2. Verfahren nach Anspruch 1, wobei der Timer gestoppt wird, sobald die Präsenz des Eingabemittels (2) in dem vordefinierten ersten Bereich (11) endet.

3. Verfahren nach einem der vorstehenden Ansprüche, wobei
- der vordefinierte erste Bereich (11) in einem Abstandsbereich zwischen einem Abstand (a) 1 mm von der Oberfläche der Bedieneinheit (1) und einem Abstand (a) von 100 mm angeordnet ist, insbesondere einen Mindestabstand größer 0 mm, bevorzugt größer 1 mm, äußerst bevorzugt größer 2 mm von der Oberfläche aufweist, und
- in Erstreckungsrichtung einer Oberfläche der Bedieneinheit (1) im Wesentlichen entsprechend der Schaltfläche (10, 20, 30) begrenzt ist.

4. Verfahren nach einem der vorstehenden Ansprüche, wobei
- der Schritt des Erkennens (100) der Präsenz ein Erkennen eines Übertritts (P1) des Eingabemittels (2) von einem vordefinierten zweiten Bereich (21) in den vordefinierten ersten Bereich (11) bezüglich der Bedieneinheit (1) umfasst.

5. Verfahren nach einem der vorstehenden Ansprüche, wobei
- der Ablauf des Timers eine Audioausgabe veranlasst, und/oder
- die Schaltfläche (10, 20, 30) ein Element eines Hauptbildschirms ist.

6. Verfahren nach einem der vorstehenden Ansprüche, wobei die Sekundärfunktion
- eine Ausgabe einer letzten Navigationsansage, oder
- ein Start eines kontextspezifischen Sprachdialogs, oder
- ein Vorlesen einer Textnachricht, oder
- ein Befehl für eine Eingabe eines neuen Navigationsziels, oder
- ein Befehl zur Eingabe eines wiederzugebenden Musiktitels, oder
- eine Änderung eines Inhaltes der Schaltfläche (10, 20, 30), oder
- ein Beginn eines Vorgangs zum Verschieben des Inhaltes der Schaltfläche (10, 20, 30) an eine andere Position, insbesondere auf eine weitere Anzeigeeinheit, oder
- ein Befehl zur Anpassung einer Darstellungsgröße des Inhaltes der Schaltfläche (10, 20, 30), ist.

7. Verfahren nach einem der vorstehenden Ansprüche, weiter umfassend den Schritt
- Zuordnen (100) einer Sekundärfunktion zu einer Schaltfläche (10, 20, 30) durch einen Anwender.

8. Anwenderschnittstelle, insbesondere fest in einem Kraftfahrzeug (8) verbaute Mensch-Maschine-Schnittstelle, umfassend:
- eine berührungsempfindliche Bedieneinheit (1),
- eine Erkennungseinrichtung (6) zum Erkennen einer Anwendereingabe, und
- eine Verarbeitungseinrichtung (7),
wobei die Anwenderschnittstelle eingerichtet ist, ein Verfahren nach einem der vorstehenden Ansprüche durchzuführen.

9. Anwenderschnittstelle nach Anspruch 8, wobei
- die Bedieneinheit (1) zentral im Armaturenbrett eines Kraftfahrzeugs (8) angeordnet ist, und/oder
- die Erkennungseinrichtung (6) ein Kamerasystem und/oder einen kapazitiven Sensor umfasst.

## Claims

1. Method for assisting a user with the operation of a touch-sensitive operating unit (1), comprising the steps of:
- detecting (200) a presence of an input means (2), in particular a finger of the user, in a predefined first region (11), which does not have any contact with the operating unit (1), in front of a button (10, 20, 30) displayed on the operating unit (1),
**characterized by**, in response to this:
- starting of a timer with a predefined duration and, in response to expiry of the timer,
- performance (400) of a secondary function of the button (10, 20, 30) associated with the button (10, 20, 30), wherein
- a primary function is performed if the presence of the input means (2) ends in a predefined first time range of the timer, and
- the secondary function is performed if the presence of the input means (2) ends in a predefined second time range, wherein the first time range is shorter than the second time range.

2. Method according to Claim 1, wherein the timer is stopped as soon as the presence of the input means (2) ends in the predefined first region (11).

3. Method according to one of the preceding claims, wherein
- the predefined first region (11) is arranged in a distance range between a distance (a) of 1 mm from the surface of the operating unit (1) and a distance (a) of 100 mm, in particular is at a minimum distance of greater than 0 mm, preferably greater than 1 mm, extremely preferably greater than 2 mm, from the surface, and
- is limited in the direction of extent of a surface of the operating unit (1) substantially corresponding to the button (10, 20, 30).

4. Method according to one of the preceding claims, wherein
- the step of detecting (100) the presence comprises detecting when the input means (2) passes over (P1) from a predefined second region (21) into the predefined first region (11) with respect to the operating unit (1).

5. Method according to one of the preceding claims, wherein
- the expiry of the timer prompts an audio output, and/or
- the button (10, 20, 30) is an element of a main screen.

6. Method according to one of the preceding claims, wherein the secondary function is
- an output of a last navigation announcement, or
- a start of a context-specific voice dialogue, or
- reading aloud of a text message, or
- a command to input a new navigation destination, or
- a command to input a music title to be played back, or
- a change in content of the button (10, 20, 30) or
- a start of an operation for shifting the content of the button (10, 20, 30) to another position, in particular to a further display unit, or
- a command for adjusting a display size of the content of the button (10, 20, 30).

7. Method according to one of the preceding claims, also comprising the step of
- assigning (100) a secondary function to a button (10, 20, 30) by a user.

8. User interface, in particular man-machine interface permanently installed in a motor vehicle (8), comprising:
- a touch-sensitive operating unit (1),
- a detection device (6) for detecting a user input, and
- a processing device (7),
wherein the user interface is configured to carry out a method according to one of the preceding claims.

9. User interface according to Claim 8, wherein
- the operating unit (1) is arranged centrally in the dashboard of a motor vehicle (8), and/or
- the detection device (6) comprises a camera system and/or a capacitive sensor.

## Revendications

1. Procédé d'aide d'un utilisateur dans le fonctionnement d'une unité de commande tactile (1), le procédé comprenant les étapes suivantes :
- détecter (200) la présence d'un moyen d'entrée (2), notamment d'un doigt de l'utilisateur, dans une première zone prédéfinie (11) qui n'a pas de contact avec l'unité de commande (1), devant un bouton (10, 20, 30) affiché sur l'unité de commande (1),
**caractérisé par** les étapes suivantes en réponse à ladite détection :
- démarrer un temporisateur de période prédéfinie et en réponse à l'expiration du temporisateur
- exécuter (400) une fonction secondaire du bouton (10, 20, 30) qui est associée au bouton (10, 20, 30),
- une fonction primaire étant exécutée lorsque la présence du moyen d'entrée (2) se termine dans une première plage de temps prédéfinie du temporisateur, et
- la fonction secondaire étant réalisée lorsque la présence du moyen d'entrée (2) se termine dans une deuxième plage de temps prédéfinie du temporisateur, la première plage de temps étant plus courte que la deuxième plage de temps.

2. Procédé selon la revendication 1, le temporisateur étant arrêté dès que la présence du moyen d'entrée (2) dans la première zone prédéfinie (11) se termine.

3. Procédé selon l'une des revendications précédentes,
- la première zone prédéfinie (11) étant disposée dans une plage de distance comprise entre une distance (a) de 1 mm de la surface de l'unité de commande (1) et une distance (a) de 100 mm, notamment une distance minimale supérieure à 0 mm, de préférence supérieure à 1 mm , plus préférablement supérieure à 2 mm, de la surface et
- la direction d'extension d'une surface de l'unité de commande (1) étant limitée sensiblement selon le bouton (10, 20, 30).

4. Procédé selon l'une des revendications précédentes,
- l'étape de détection (100) de la présence comprenant la détection d'une transition (P1) du moyen d'entrée (2) d'une deuxième zone prédéfinie (21) dans la première zone prédéfinie (11) par rapport à l'unité de commande (1).

5. Procédé selon l'une des revendications précédentes,
- l'expiration du temporisateur déclenchant une sortie audio, et/ou
- le bouton (10, 20, 30) étant un élément d'un écran principal.

6. Procédé selon l'une des revendications précédentes, la fonction secondaire étant
- la délivrance d'une dernière annonce de navigation, ou
- le début d'un dialogue vocal spécifique au contexte, ou
- la lecture d'un SMS, ou
- l'instruction d'entrer une nouvelle destination de navigation, ou
- l'instruction d'entrer une titre musical à reproduire, ou
- la modification d'un contenu du bouton (10, 20, 30), ou
- le début d'un processus de déplacement du contenu du bouton (10, 20, 30) vers une autre position, notamment vers une autre unité d'affichage, ou
- l'instruction d'ajuster la taille d'affichage du contenu du bouton (10, 20, 30).

7. Procédé selon l'une des revendications précédentes, comprenant en outre l'étape suivante :
- associer (100) une fonction secondaire à un bouton (10, 20, 30) par le biais d'un utilisateur.

8. Interface utilisateur, notamment interface homme-machine installée de manière fixe dans un véhicule automobile (8), ladite interface utilisateur comprenant :
- une unité de commande tactile (1),
- un dispositif de détection (6) destiné à détecter une entrée d'utilisateur, et
- un dispositif de traitement (7),
l'interface utilisateur étant conçue pour exécuter un procédé selon l'une des revendications précédentes.

9. Interface utilisateur selon la revendication 8,
- l'unité de commande (1) étant disposée de manière centrale dans le tableau de bord d'un véhicule automobile (8), et/ou
- le dispositif de détection (6) comprenant un système à caméra et/ou un capteur capacitif.
